# EUROPÄISCHE PATENTSCHRIFT

(11) **EP 2 203 041 B1**
(45) Veröffentlichungstag und Bekanntmachung des Hinweises auf die Patenterteilung: **18.04.2012**
(21) Anmeldenummer: 08843717.3
(22) Anmeldetag: 31.10.2008
(51) Int. Cl.: A01D 45/00

(54) **AUFNAHMEVORRICHTUNG ZUM ABERNTEN UND ZUFÜHREN VON GURKENPFLANZEN ZU EINER FAHRBAREN ERNTEMASCHINE**
RECEPTACLE FOR HARVESTING AND SUPPLYING CUCUMBER PLANTS TO A MOBILE HARVESTING MACHINE
DISPOSITIF RÉCEPTEUR POUR RÉCOLTER DES PLANTS DE CORNICHONS ET LES APPORTER À UNE RÉCOLTEUSE SUR ROUES

(30) Priorität: 02.11.2007 DE 102007052272
(43) Veröffentlichungstag der Anmeldung: 07.07.2010
(73) Patentinhaber: Develey Holding GmbH & Co. Beteiligungs KG, 82008 Unterhaching (DE)
(72) Erfinder: WAGNER, Franz, 84347 Pfarrkirchen (DE); FLEISCHMANN, Erwin, 94436 Simbach (DE)
(74) Vertreter: Sandmann, Joachim
(86) Internationale Anmeldenummer: PCT/EP2008/009216
(87) Internationale Veröffentlichungsnummer: WO 2009/056337

(56) Entgegenhaltungen:
- EP-A- 0 374 889
- GB-A- 1 154 814
- US-A- 3 518 818
- US-A- 5 930 987

## Beschreibung

Die Erfindung betrifft eine Aufnahmevorrichtung zum Abernten und Zuführen von Gurkenpflanzen zu einer fahrbaren Erntemaschine, in der die Gurken von den Pflanzen getrennt werden. Die Aufnahmevorrichtung ist ausgebildet mit zwei seitlichen Radscheiben, die im Umfangsbereich in den Boden eingreifen und dem Freischneiden einer Erntebahn dienen, einem der Bahnbreite angepassten Umlauffördeder mit Zinken zum Anheben und Fördern der Gurkenpflanzen zur Erntemaschine und mit einer sich über die Bahnbreite erstreckenden Schneideinrichtung zum bodennahen Abschneiden der Gurkenpflanzen unmittelbar nach dem Anheben, wobei die Schneideinrichtung mittels einer Bodenabtasteinrichtung höhengesteuert ist.

Eine solche Aufnahmevorrichtung ist aus US 3 518 818 bekannt. Das vorgesehene Abschneiden der Gurkenpflanzen oberhalb der Erdoberfläche ermöglicht den Einsatz auch bei nicht sandigen Böden, bei denen das allgemein bekannte Abschneiden einige Zentimeter unterhalb der Erdoberfläche (z.B. US 3 603 067) zu einer Mitnahme von Erde in die Erntemaschine und dadurch zu erheblichen Störungen führen würde.

Störungen beim Erntebetrieb ergeben sich aber insbesondere auch durch Pflanzenstau vor der Erntemaschine. Zudem ist es aus Ertragsgründen erforderlich, durch den Erntevorgang bedingte Schäden an den Gurkenfrüchten weitgehend zu vermeiden. In beiderlei Hinsicht vermag die bekannte Aufnahmevorrichtung den Anforderungen nicht zu genügen.

Nach den der Erfindung zugrunde liegenden Erkenntnissen ist dies darin begründet, dass bei der eingangs beschriebenen Ausbildung der Umlaufförderer ein Kettenförderer ist, der mit starren metallischen Zinken ausgestattet ist, und dass innerhalb der Förderstrecke des Umlaufförderers die Gurkenpflanzen fortschreitende von den Zinken abgehoben werden, wobei die Gurkenpflanzen nach dem vollständigen Zurückziehen der Zinken nicht mehr zwangsweise vorgeschoben und nicht geführt sind. Dadurch kommt es des öfteren zu Pflanzenstau vor der Erntemaschine mit entsprechenden Unterbrechungen des Erntebetriebs. Des weiteren ist es bisher nicht möglich, eine gattungsgemäße Aufnahmevorrichtung zum Abernten bei Folienanbau einzusetzen, weil es dann infolge von Bodenunebenheiten und Ermangelung einer angepassten Höhensteuerung der Schneideinrichtung und der umlaufenden Förderzinken dazu kommt, dass die Folie erfaßt und zerfetzt wird. Daher muß bisher beim Folienanbau, der in klimatisch weniger begünstigten Gebieten unter dem Gesichtspunkt des Ertrags besonders sinnvoll ist, die Gurkenernte in aufwendiger Weise manuell erfolgen.

Dementsprechend liegt der Erfindung die Aufgabe zugrunde, eine Aufnahmevorrichtung zu schaffen, die auch für den Folienanbau geeignet ist, Unterbrechungen infolge von Betriebsstörungen weitgehend vermeidet und eine schonende Behandlung der Gurkenpflanzen gewährleistet.

Diese Aufgabe wird erfindungsgemäß dadurch gelöst, dass der Umlaufförderer ein Förderband aufweist und die Zinken von Stacheln aus Gummi oder gummielastischem Kunststoff gebildet sind, dass dem Förderband ein gegenläufig umlaufendes Deckband zugeordnet ist, das Querleisten ebenfalls aus Gummi oder gummielastischem Kunststoff aufweist und mit dem Förderband einen bis zur Erntemaschine führenden Förderkanal für die Gurkenpflanzen bildet, und dass als Bodenabtasteinrichtung eine Walze vorgesehen ist, die sich über die Bahnbreite erstreckt.

Bei dieser erfindungsgemäßen Ausbildung sorgt die vergleichsweise lange Abtastwalze dafür, dass beim Ernten auf einer Abdeckfolie diese am Boden niedergehalten wird und die höhengesteuerte Schneideinrichtung sicher und über die gesamte Bahnbreite im Abstand zu allen örtlichen Bodenerhebungen gehalten wird. Das gilt auch für die elastischen Förderbandstacheln und Deckbandleisten, die als weiche und auslenkbare Teile ohnehin keinen Schaden anrichten. Dabei garantieren diese elastischen Teile eine schonende Behandlung der Gurkenfrüchte und bewirken einen zwangsweisen Transport bis in die Erntemaschine ohne Stau auf dem Wege dorthin.

Bei einer zweckmäßigen Ausgestaltung sind die Querleisten zum Deckband derart geneigt, dass ihr äußeres Ende in Umlaufrichtung vorspringt. Hierdurch wird ein sicherer Transport der Gurkenpflanzen mit der vorgesehenen Fördergeschwindigkeit ohne Staubildung begünstigt. Es ist von Vorteil, wenn der Neigungswinkel des Deckbandes größer als der Neigungswinkel des Förderbandes ist, so dass der Querschnitt des Förderkanals sich zur Erntemaschine hin vergrößert. Auch diese Maßnahme wirkt sich stauverhindernd aus.

Zweckmäßigerweise ist der Walze eine Abstreifleiste zur Reinigung zugeordnet. Eine von anhaftender Erde freie Abtastwalze gewährleistet eine exakt den Bodengegebenheiten stets angepasste Höhensteuerung.

Vorzugsweise ist die Schneideinrichtung von einer rotierenden Messerscheibe oder von zwei oder mehr seitlich benachbarten rotierenden Messerscheiben gebildet, die gemeinsam die Bahnbreite überdecken. Dabei kann die bzw. jede Messerscheibe von einem scheibenförmigen Träger mit wenigstens einem radial vorspringenden Messer gebildet sein. Bei der Verwendung von zwei oder mehr Messerscheiben sind diese dann zweckmäßigigerweise so ausgeführt, dass die Messer unmittelbar benachbarter Scheiben zueinander winkelversetzt sind und so weit radial vorspringen, dass die Schneidbreiten der unmittelbar benachbarten Scheiben sich überlappen. Diese Maßnahmen führen zu einem vergleichsweise einfachen rotierenden Messerantrieb, zu vergleichsweise kleinen Messerscheiben bzw. Messerträgern und zu einem sicheren Abschneiden auch der Gurkenpflanzen in der Mitte zwischen benachbarten Messerscheiben.

Ferner hat sich eine Ausbildung bewährt, bei der die bzw. jede Messerscheibe in Fahrtrichtung abwärts geneigt ist.

Bei einer bevorzugten Ausführungsform ist die Aufnahmevorrichtung am vorderen Ende der Erntemaschine angelenkt und mittels eines an der Erntemaschine abgestützten Hydraulikzylinders hochschwenkbar.

Ein Ausführungsbeispiel der Erfindung wird nachfolgend anhand einer schematischen Zeichnung einer Aufnahmevorrichtung näher erläutert. Es zeigen:
- Figur 1: die Aufnahmevorrichtung in Seitenansicht;
- Figur 2: die Aufnahmevorrichtung in einer Ansicht von vorne und
- Figur 3: die Aufnahmevorrichtung in Draufsicht.

Die Aufnahmevorrichtung 1 ist vor einer auf Rädern verfahrbaren Erntemaschine 2 angeordnet, von der nur das vordere Ende 3 dargestellt ist. An dieses ist die Aufnahmevorrichtung 1 mittels einer Anlenkung 4 verschwenkbar angelenkt. Ein am vorderen Ende 3 der Erntemaschine 2 abgestützter Hydraulikzylinder 5 ist zum Hochschwenken der Aufnahmevorrichtung 1 vorgesehen.

Am vorderen Ende 3 der Erntemaschine 2 ist eine sich quer zur Fahrtrichtung erstreckende Führungswalze 6 gelagert. Die Lager sind mit 7 bezeichnet. Die Führungswalze 6, der ein Abstreifer 8 zugeordnet ist, liegt auf dem Boden 9 auf, der gegebenenfalls von einer Folie (nicht dargestellt) abgedeckt sein kann, und hält dadurch das vordere Ende 3 der Erntemaschine 2 in einem gleichbleibenden geringen Abstand über dem Erdboden 9.

Die Aufnahmeeinrichtung 1 weist einen Umlaufförderer 10 auf, der von einem Förderband 11 gebildet ist, das mit Stacheln 12 bestückt ist, die senkrecht vom Förderband 11 aufragen, aus Gummi oder gummielastischem Kunststoff bestehen und eine gerundete Spitze aufweisen. Das von einem Hydraulikmotor 11a angetriebene Förderband 11 läuft über eine obere Antriebswalze 13 und eine untere Umlenkwalze 14 und ist auf seiner Außenseite von seitlichen Tragrollen 15 abgestützt. Der Umlenkwalze 14 ist eine Spannstation 16 zugeordnet, die für die richtige Bandspannung sorgt.

Wie durch einen Pfeil angedeutet läuft das Förderband 11 im Gegenuhrzeigersinn um, wobei die Anordnung so getroffen ist, dass die Stacheln 12 im Umlenkbereich unterhalb der Umlenkwalze 14 einen minimalen Abstand zum Boden 9 haben oder aber diesen mit ihren auslenkbaren Spitzen leicht berühren. Dabei bewirken die umlaufenden Stacheln 12 ein Mitnehmen und gleichzeitiges Anheben der auf dem Boden 9 wachsenden Gurkenpflanzen (nicht dargestellt).

Im Rahmen 17 der Aufnahmevorrichtung 1 ist außer dem Förderband 11 auch ein von einem Hydraulikmotor 18a angetriebenes Deckband 18 gelagert, das wie durch einen Pfeil angedeutet im Uhrzeigersinn um eine obere Antriebswalze 19 und eine untere Umlenkwalze 20 umläuft. Eine Spannstation 21 sorgt auch hier für die richtige Wandspannung.

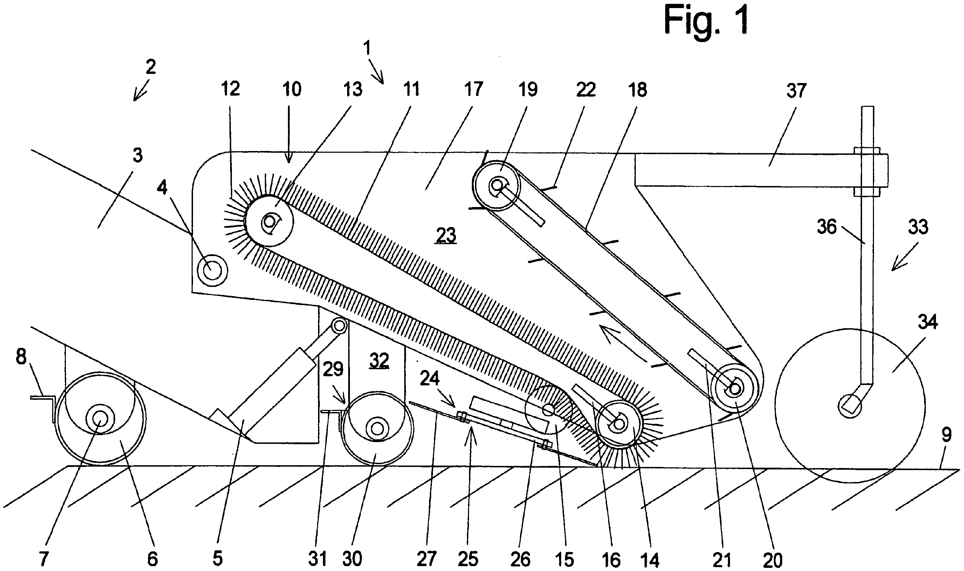

Das Deckband 18 ist mit vorragenden Querleisten 22 versehen, die ebenfalls aus Gummi oder gummielastischem Kunststoff bestehen. Diese Querleisten 22 sind nicht senkrecht zum Deckband 22 angeordnet sondern derart geneigt, dass sie mit ihrem äußeren Ende in Umlaufrichtung vorspringen. Dadurch greifen sie besser in den geförderten Pflanzenstrom ein, der durch den Förderkanal 23 zwischen den beiden Bändern 11 und 18 gebildet ist, deren Abstand zueinander einstellbar ist (nicht dargestellt) Der Förderkanal 23 erweitert sich in der den beiden Pfeilen entsprechenden Förderrichtung, weil das Deckband 18 steiler als das Förderband 11 angeordnet ist. Die Querleisten 22 laufen auch unterhalb der Umlenkwalze 20 in größerem Abstand zum Boden 9 um, wie es aus Figur 1 zu ersehen ist.

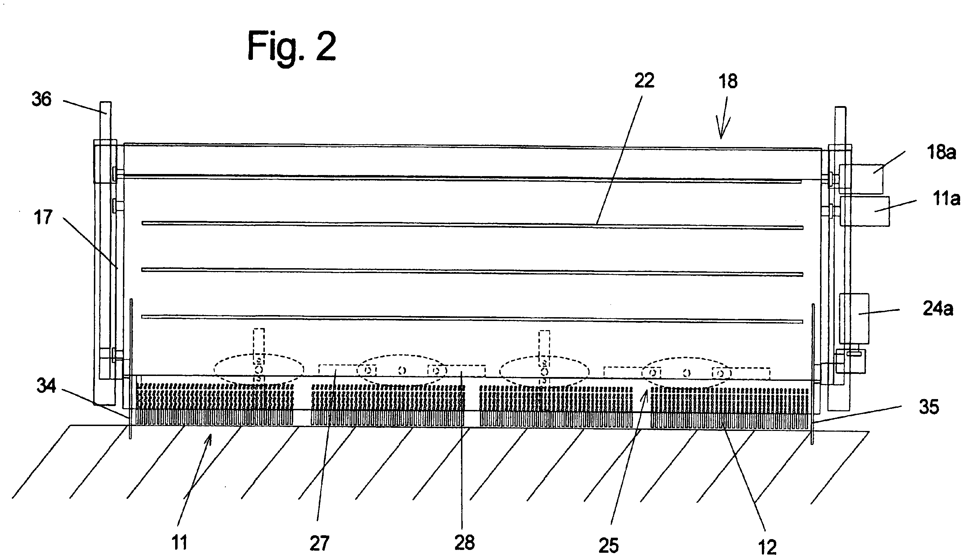

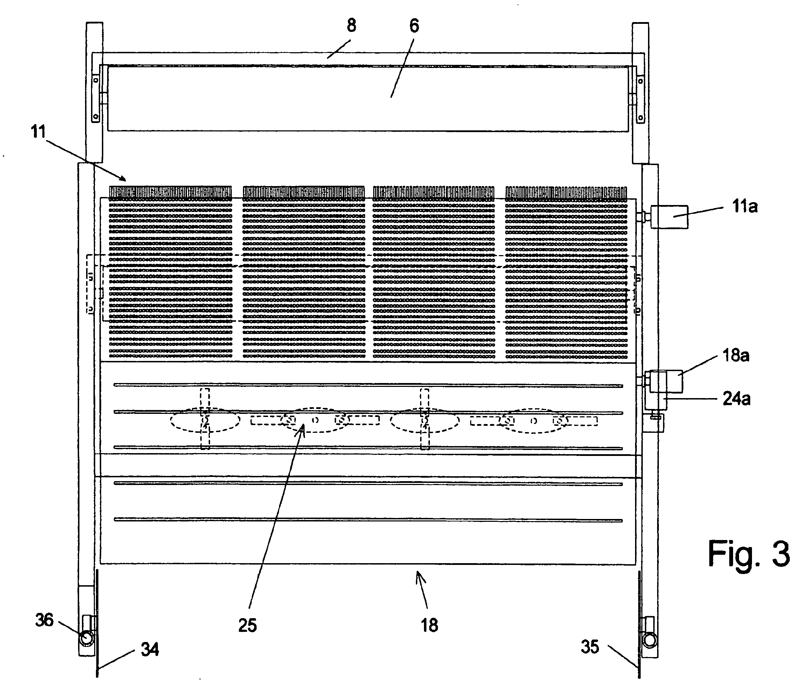

In Fahrtrichtung hinter der Umlenkwalze 14 des Förderbands 11 ist eine von einem Hydraulikmotor 24a angetriebene Schneideinrichtung 24 angeordnet, die von vier auf einer Querlinie nebeneinander angeordneten und gleichmäßig über die Bahnbreite verteilten rotierenden Messerscheiben 25 gebildet ist, wie es Figuren 2 und 3 zeigen. Die vier Messerscheiben 25 sind in gleicher Weise ausgebildet und bestehen jeweils aus einem scheibenförmigen Träger 26, an den diametral gegenüberliegend zwei radial vorspringende Messer 27 und 28 angebracht sind. Die Messer 27, 28 benachbarter Messerscheiben 25 sind mit einer um 90° versetzten Orientierung angebracht, wie es die Figuren 2 und 3 zeigen. Dadurch ist es möglich, jeder Messerscheibe 25 eine Schneidbreite zu geben, die etwas größer als der Mittenabstand zwischen den Rotationachsen benachbarter Messerscheiben 25 ist.

Die Messerscheiben 25 sind in Fahrtrichtung abwärts geneigt, wobei die radial äußeren Messerenden bis nahe an den Boden 7 und die Spitzen der sich um die Umlenkwalze 14 drehenden Stacheln 12 heranreichen, wie es Figur 1 zeigt. Somit werden die abzuerntenden Gurkenpflanzen alsbald nach dem Erfassen durch die Stacheln 12 des Förderbands 11 von ihrem in der Erde verbleibenden Wurzelteil abgetrennt.

Damit die Messerscheiben 25 und auch die Stacheln 12 trotz vorhandener Bodenunebenheiten nicht in schädlicher Weise in den Boden 9 eindringen und bei Folienanbau auch nicht in die auf dem Boden befindliche Folie zerreißen, ist eine genaue Höheneinstellung in Anpassung an die Bodengegebenheiten erforderlich. Dazu ist eine Bodenabtasteinrichtung 29 vorgesehen, die eine Abtastwalze 30 mit einer Abstreifleiste 31 aufweist. Die Abtastwalze 30 erstreckt sich im wesentlichen über die gesamte Breite der Vorrichtung 1 und ist in zwei vom Rahmen 17 herabragenden seitlichen Tragarmen 32 gelagert ist. Die Abtastwalze 30 liegt auf dem Boden 9 auf und bestimmt so die jeweilige Höhenlage der gesamten Aufnahmevorrichtung 1 einschließlich der Schneideinrichtung 24 und des Umlaufförderers 10.

Damit das Anheben und Weiterfördern der Gurkenpflanzen im Bereich der seitlichen Erntebahnränder nicht durch das Zusammenwachsen oder Verflechten mit außerhalb der Erntebahn wachsenden Gurkenpflanzen behindert wird, ist eine Freischneideinrichtung 33 am vorderen Ende der Aufnahmevorrichtung 1 vorgesehen, die eine Erntebahn entsprechend der Breite der Aufnahmevorrichtung vorgibt. Diese Freischneideinrichtung 33 besteht aus zwei seitlichen Radscheiben 34 und 35, die senkrecht angeordnet und längsgerichtet sind sowie sichelartig wirkende Umfangskanten aufweisen. Die Radscheiben 34, 35 sind an senkrechten Lagerpfosten 36 gelagert, die ihrerseits in vom Rahmen 17 vorragenden Tragarmen 37 höheneinstellbar gelagert sind. Die Lagerpfosten 36 werden gemäß Figur 1 so eingestellt, dass die Radscheiben 34, 35 einige Zentimeter in den Boden 9 eindringen. Dementsprechend bewirken die Radscheiben 34 und 35 mit ihrem scharfkantigen Umfang ein Durchtrennen der Gurkenpflanzen, so dass sie eine Erntebahn freischneiden, deren Breite dem Abstand zwischen den beiden Radscheiben 34, 35 entspricht.

Die vorstehend beschriebene Aufnahmevorrichtung 1 wurde als Prototyp gebaut und erfolgreich getestet, wobei sich die Eignung auch auf Anbaufolie, die Unanfälligkeit für staubedingte Betriebsstörungen und die schonende Behandlung der Gurkenfrüchte erwiesen haben. Dabei lagen folgende Werte zugrunde:

| | |
|---|---|
| Erntebahnbreite: | 2,0 m, |
| Länge der Stacheln 12: | 5,0 cm, |
| Durchmesser der Stacheln 12, außen: | 5,5 mm, |
| Durchmesser der Stacheln 12, am Grund | 6,5 mm, |
| Mittenabstand der Stacheln 12, quer: | 15 mm, |
| Mittenabstand der Stacheln 12, längs: | 10 mm, |
| Höhe der Querleisten 22: | 5,0 cm, |
| Neigungswinkel der Querleisten 22: | 40 °, |
| Abmessung Förderkanal 23, unten: | 5,0 cm, |
| Abmessung Förderkanal 23, oben: | 11,0 cm. |

### Bezugszeichenliste

- 1: Aufnahmevorrichtung
- 2: Erntemaschine
- 3: vorderes Ende (von 2)
- 4: Anlenkung
- 5: Hydraulikzylinder
- 6: Führungswalze
- 7: Lager
- 8: Abstreifer
- 9: Boden
- 10: Umlaufförderer
- 11: Förderband
- 11a: Hydraulikmotor (für 11)
- 12: Stacheln
- 13: Antriebswalze
- 14: Umlenkwalze
- 15: Tragrollen
- 16: Spannstation
- 17: Rahmen
- 18: Deckband
- 18a: Hydraulikmotor (für 18)
- 19: Antriebswalze
- 20: Umlenkwalze
- 21: Spannstation
- 22: Querleisten
- 23: Förderkanal
- 24: Schneideinrichtung
- 24a: Hydraulikmotor (für 24)
- 25: Messerscheibe
- 26: scheibenförmiger Träger
- 27: Messer
- 28: Messer
- 29: Bodenabtasteinrichtung
- 30: Abtastwalze
- 31: Abstreifleiste
- 32: Tragarm ,
- 33: Freischneideinrichtung
- 34: Radscheibe
- 35: Radscheibe
- 36: Lagerpfosten
- 37: Tragarm

## Patentansprüche

1. Aufnahmevorrichtung zum Abernten und Zuführen von Gurkenpflanzen zu einer fahrbaren Erntemaschine (2), in der die Gurken von den Pflanzen getrennt werden, mit zwei seitlichen Radscheiben (34, 35), die im Umfangsbereich in den Boden (9) eingreifen und dem Freischneiden einer Erntebahn dienen, einem der Bahnbreite angepaßten Umlaufförderer (10) mit Zinken zum Anheben und Fördern der Gurkenpflanzen zur Erntemaschine (2) und mit einer sich über die Bahnbreite erstreckenden Schneideinrichtung (24) zum bodennahen Abschneiden der Gurkenpflanzen unmittelbar nach dem Anheben, wobei die Schneideinrichtung (24) mittels einer Bodenabtasteinrichtung (29) höhengesteuert ist, **dadurch gekennzeichnet, daß** der Umlaufförderer (10) ein Förderband (11) aufweist und die Zinken von Stacheln (12) aus Gummi oder gummielastischem Kunststoff gebildet sind, dass dem Förderband (11) ein gegenläufig umlaufendes Deckband (18) zugeordnet ist, das Querleisten (22) ebenfalls aus Gummi oder gummielastischem Kunststoff aufweist und mit dem Förderband (11) einen bis zur Erntemaschine (2) führenden Förderkanal (23) für die Gurkenpflanzen bildet, und dass als Bodenabtasteinrichtung (29) eine Abtastwalze (30) vorgesehen ist, die sich über die Bahnbreite erstreckt.

2. Aufnahmevorrichtung nach Anspruch 1, **dadurch gekennzeichnet, dass** die Querleisten (22) zum Deckband (18) derart geneigt sind, dass ihr äußeres Ende in Umlaufrichtung vorspringt.

3. Aufnahmevorrichtung nach Anspruch 1 oder 2, **dadurch gekennzeichnet, dass** der Neigungswinkel des Deckbandes (18) größer als der Neigungswinkel des Förderbandes (11) ist, so dass der Querschnitt des Förderkanals sich zur Erntemaschine (2) hin vergrößert.

4. Aufnahmevorrichtung nach Anspruch 3, **dadurch gekennzeichnet, dass** der Abtastwalze (30) eine Abstreifleiste (31) zur Reinigung zugeordnet ist.

5. Aufnahmevorrichtung nach einem der Ansprüche 1 bis 4, **dadurch gekennzeichnet, dass** die Schneideinrichtung (24) von einer rotierenden Messerscheibe (25) oder von zwei oder mehr über die Bahnbreite verteilten rotierenden Messerscheiben (25) gebildet ist.

6. Aufnahmevorrichtung nach Anspruch 5, **dadurch gekennzeichnet, dass** die bzw. jede Messerscheibe (25) von einem scheibenförmigen Träger (26) mit wenigstens einem radial vorspringenden Messer (27, 28) gebildet ist.

7. Aufnahmevorrichtung nach Anspruch 6 mit zwei oder mehr Messerscheiben (25), **dadurch gekennzeichnet, dass** die Messer (27, 28) unmittelbar benachbarter Scheiben (25) zueinander winkelversetzt sind und soweit radial vorspringen; dass die Schneidbreiten der unmittelbar benachbarten Scheiben (25) sich überlappen.

8. Aufnahmevorrichtung nach einem der Ansprüche 5 bis 7, **dadurch gekennzeichnet, dass** die bzw. jede Messerscheibe (25) in Fahrtrichtung abwärts geneigt ist.

9. Aufnahmevorrichtung nach einem der Ansprüche 1 bis 8, **dadurch gekennzeichnet, dass** sie (1) am vorderen Ende (3) der Erntemaschine (2) angelenkt (bei 4) und mittels eines an der Erntemaschine (2) abgestützten Hydraulikzylinders (5) hochschwenkbar ist.

## Claims

1. A pick-up device for harvesting and supplying cucumber plants to a mobile harvesting machine (2) in which the cucumbers are separated from the plants, comprising two lateral wheel disks (34, 35), which in the peripheral region bite into the ground (9) and serve to clear a harvesting path, comprising a circulating conveyor (10), tailored to the path width and having tines for raising and conveying the cucumber plants to the harvesting machine (2), and further comprising a cutting device (24), extending over the path width, for cutting off the cucumber plants close to the ground directly after the raising, the cutting device (24) being controlled in height by means of a ground sensing device (29), **wherein** the circulating conveyor (10) has a conveyor belt (11) and the tines are formed by spikes (12) made of rubber or elastomeric plastic, wherein assigned to the conveyor belt (11) is a counter-circulating cover belt (18), which has transverse moldings (22), likewise made of rubber or elastomeric plastic, and forms with the conveyor belt (11) a feed channel (23), leading up to the harvesting machine (2), for the cucumber plants, and wherein as the ground sensing device (29) a sensing roll (30) is provided, which extends over the path width.

2. The pick-up device as claimed in claim 1, **wherein** the transverse moldings (22) are tilted relative to the cover belt (18) such that their outer end projects in the direction of circulation.

3. The pick-up device as claimed in claim 1 or 2, **wherein** the angle of inclination of the cover belt (18) is greater than the angle of inclination of the conveyor belt (11), so that the cross section of the feed channel increases in the direction of the harvesting machine (2).

4. The pick-up device as claimed in claim 3, **wherein** a scraper bar (31) is assigned to the sensing roll (30) for cleaning purposes.

5. The pick-up device as claimed in one of claims 1 to 4, **wherein** the cutting device (24) is formed by a rotary blade disk (25) or by two or more rotary blade disks (25) distributed over the path width.

6. The pick-up device as claimed in claim 5, **wherein** the or each blade disk (25) is formed by a disk-shaped carrier (26) having at least one radially projecting blade (27, 28).

7. The pick-up device as claimed in claim 6, comprising two or more blade disks (25), **wherein** the blades (27, 28) of directly adjacent disks (25) are angularly offset relative to each other and project sufficiently far in the radial direction that the cutting widths of the directly adjacent disks (25) overlap.

8. The pick-up device as claimed in one of claims 5 to 7, **wherein** the or each blade disk (25) is tilted downward in the direction of travel.

9. The pick-up device as claimed in one of claims 1 to 8, **wherein** it (1) is attached to the front end (3) of the harvesting machine (2) (at 4) and can be swung up by means of a hydraulic cylinder (5) supported on the harvesting machine (2).

## Revendications

1. Dispositif de levage pour récolter des plants de cornichon et les apporter à une récolteuse sur roues (2), dans lequel les cornichons sont séparés des plants, avec deux disques latéraux (34, 35), qui pénètrent dans le sol (9) dans la région périphérique et servent à tracer un chemin de récolte, avec un transporteur sans fin (10) adapté à la largeur du chemin avec des dents pour soulever et transporter les plants de cornichons vers la récolteuse (2) et avec un dispositif de coupe (24) s'étendant sur la largeur du chemin pour la coupe près du sol des plants de cornichons immédiatement après leur soulèvement, dans lequel le dispositif de coupe (24) est commandé en hauteur au moyen d'un dispositif de palpage du sol (29), **caractérisé en ce que** le transporteur sans fin (10) présente une bande transporteuse (11) et les dents sont formées de picots (12) en caoutchouc ou en matière plastique caoutchouteuse, **en ce qu'**une bande de recouvrement (18) circulant en sens contraire est associée à la bande transporteuse (11) et présente des lames transversales (22) également en caoutchouc ou en matière plastique caoutchouteuse et forme avec la bande transporteuse (11) un canal de transport (23) conduisant jusqu'à la récolteuse (2) pour les plants de cornichons, et **en ce qu'**il est prévu comme dispositif de palpage du sol (29) un rouleau palpeur (30), qui s'étend sur la largeur du chemin.

2. Dispositif de levage selon la revendication 1, **caractérisé en ce que** les lames transversales (22) sont inclinées vers la bande de recouvrement (18) de telle manière que leur extrémité extérieure se trouve en avant dans le sens de circulation.

3. Dispositif de levage selon la revendication 1 ou 2, **caractérisé en ce que** l'angle d'inclinaison de la bande de recouvrement (18) est plus grand que l'angle d'inclinaison de la bande transporteuse (11), de telle manière que la section transversale du canal de transport augmente en direction de la récolteuse (2).

4. Dispositif de levage selon la revendication 3, **caractérisé en ce qu'**une latte de raclage (31) est associée au rouleau palpeur (30) pour son nettoyage.

5. Dispositif de levage selon l'une quelconque des revendications 1 à 4, **caractérisé en ce que** le dispositif de coupe (24) est formé par un disque porte-couteau rotatif (25) ou par deux ou plusieurs disques porte-couteaux rotatifs (25) répartis sur la largeur du chemin.

6. Dispositif de levage selon la revendication 5, **caractérisé en ce que** le ou chaque disque porte-couteau (25) est formé par un support en forme de disque (26) avec au moins un couteau (27, 28) radialement saillant.

7. Dispositif de levage selon la revendication 6 avec deux ou plusieurs disques porte-couteaux (25), **caractérisé en ce que** les couteaux (27, 28) de disques immédiatement voisins (25) sont angulairement décalés l'un par rapport à l'autre et sont radialement saillants de telle manière que les largeurs de coupe des disques (25) immédiatement voisins se chevauchent.

8. Dispositif de levage selon l'une quelconque des revendications 5 à 7, **caractérisé en ce que** le ou chaque disque porte-couteau (25) est incliné vers le bas dans le sens du déplacement.

9. Dispositif de levage selon l'une quelconque des revendications 1 à 8, **caractérisé en ce qu'**il (1) est articulé (en 4) sur l'extrémité avant (3) de la récolteuse (2) et peut être relevé par pivotement au moyen d'un vérin hydraulique (5) prenant appui sur la récolteuse (2).
